Europäisches Patentamt

European Patent Office

Office européen des brevets

(11) Publication number: **0 305 015**
**A2**

## EUROPEAN PATENT APPLICATION

(21) Application number: 88201817.9

(22) Date of filing: 25.08.88

(51) Int. Cl.⁴: **A01B 33/08 , A01B 33/06**

(30) Priority: 27.08.87 NL 8702002

(43) Date of publication of application:
**01.03.89 Bulletin 89/09**

(84) Designated Contracting States:
**DE FR GB**

(71) Applicant: **C. van der Lely N.V.**
**Weverskade 10 P.O. Box 26**
**NL-3155 ZG Maasland(NL)**

(72) Inventor: **van der Lely, Cornelis**
**7, Brüschenrain**
**CH-Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A soil cultivating machine.**

(57) The invention relates to soil cultivating machines comprising a frame and at least one soil working member (3) that is drivable by means of a transmission including at least one gear wheel (12). The gear wheel (12) includes a gear ring (15) mounted rotatably between two plates (28) against a spring force acting around the shaft (2) of the said soil working member (3). Spring-loaded mechanisms (27) are provided that act at points on a hub (13) and a gear ring (15) of the gear wheel (12), respectively, which are interspaced by circumferential angles of approximately 120°. The gear wheel (12) is positioned in a lubricant bath and a spring-loaded mechanism (27) disposed between the hub (13) and the gear ring (15) of the gear wheel (12) is of such a construction that, during movement, the lubricant is reciprocated therethrough.

# A SOIL CULTIVATING MACHINE

The invention relates to a soil cultivating machine comprising a frame and at least one soil working member that is drivable by means of a transmission including at least one gear wheel.

In soil cultivating machines of the above-defined type, the drive for the soil working member is continuously subjected to shock loads during operation, in particular when working soils that contain many hard objects such as stones. As has been found in practice, this load may cause irreparable damage to the shaft bearing and to the teeth of the gear wheels within a shorter or longer period of time.

The invention has for its object to obviate this drawback in an effective manner.

According to the invention, this is achieved in that the gear wheel includes a gear ring mounted rotatably between two plates against a spring force acting around the shaft of the said soil working member, thereby providing the feature of mobility between a gear ring located at the periphery of the gear wheel and the hub thereof, so that the said shock loads can be absorbed effectively.

Using this structural design, it is possible to obtain in a relatively simple manner a gear wheel, by means of which a shock load can be absorbed effectively. Thus, there can be obtained a gear wheel wherein the gear ring drives the hub under spring pressure, and also a gear wheel wherein the hub drives the gear ring under spring pressure.

A still further feature of the invention concerns a soil cultivating machine of the above-defined type wherein a gear wheel is placed in a lubricant bath and wherein there is provided a spring-loaded mechanism which is of such a construction that, during movement, the lubricant passes therethrough to and fro. Thus, using a lubricant in a gear box containing the gear wheels, it is possible to achieve continuously a proper lubrication of the component parts constituting part of the gear wheel.

For a better understanding of the invention and to show how the same may be carried into effect, reference will now be made, by way of example, to the accompanying drawings, in which:

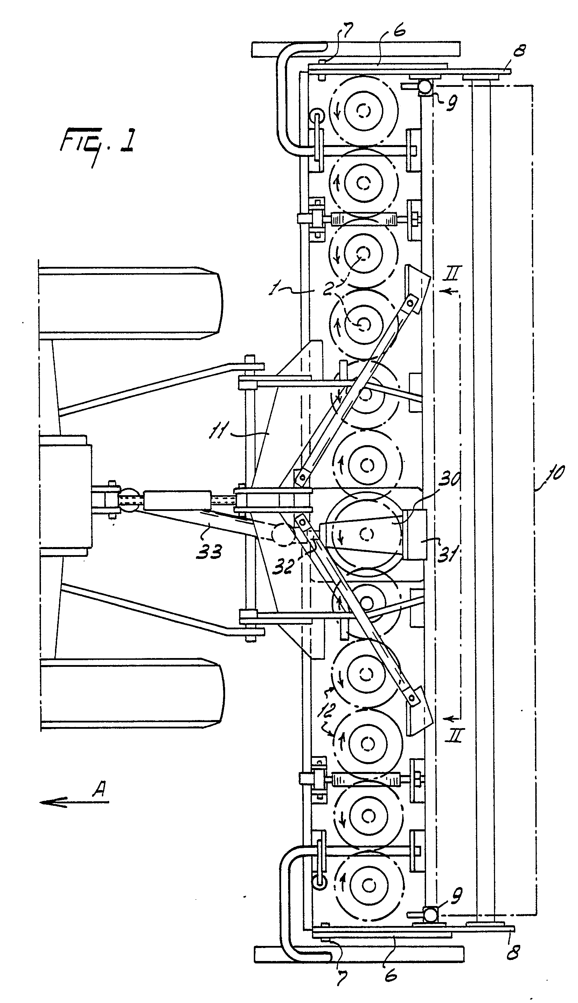

Figure 1 is a plan view of a soil cultivating machine having a transmission according to the invention;

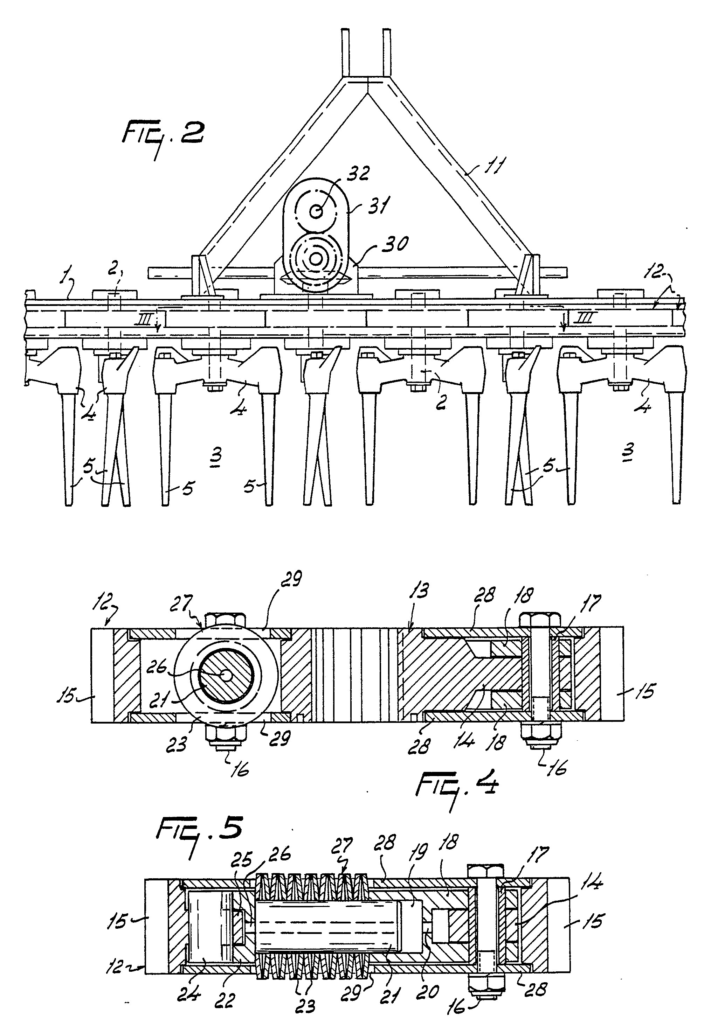

Figure 2 is, to an enlarged scale, a view taken on the line II - II in Figure 1;

Figure 3 is, to an enlarged scale, a view of part of the transmission according to the invention;

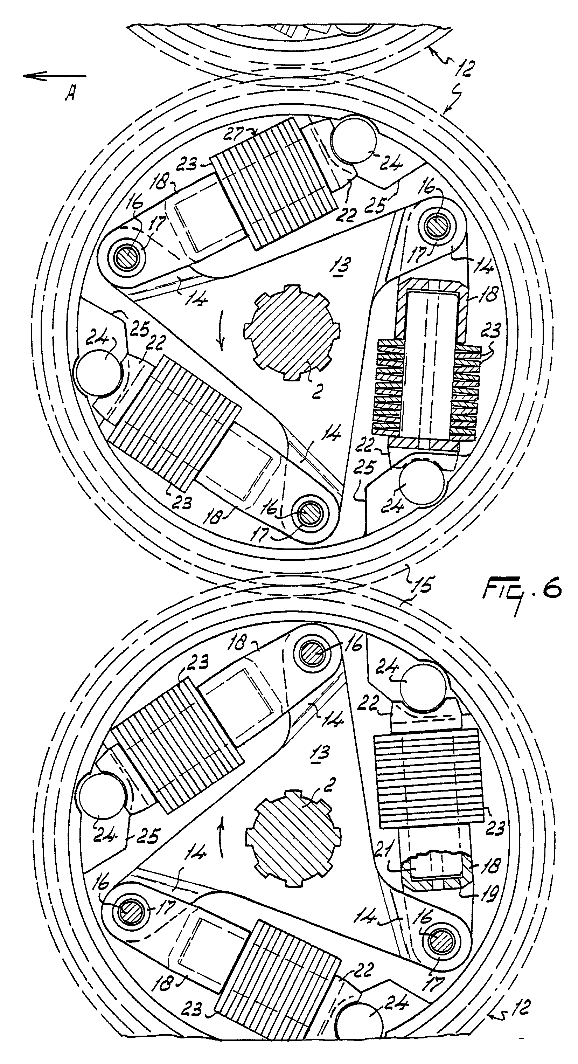

Figure 4 is, to an enlarged scale, a view taken on the line IV - IV in Figure 3;

Figure 5 is, to en enlarged scale, a view taken on the line V - V in Figure 3, and

Figure 6 is, to an enlarged scale, a view of some gear wheels in a situation wherein a gear ring of the wheels has deflected relative to the hub against the action of a spring mechanism provided in the gear wheel.

The implement shown in the drawings concerns a soil cultivating machine, in particular one for the preparation of a seed bed.

The machine comprises a box-like frame portion 1 which extends transversely to the direction of operative travel A and wherein there are supported at equal interspaces of preferably 25 cms the upwardly directed, preferably vertical, shafts 2 of soil working members 3. At its end projecting from the bottom side of the frame portion 1, the shaft 2 of each soil working member 3 is provided with an at least substantially horizontal carrier 4, which carrier at its ends is provided with downwardly extending soil working elements 5 constituted by tines.

The ends of the box-like frame portion 1 are closed by means of plates 6 which extend upwardly and at least substantially parallel to the direction of operative travel A. Near its leading side, each of the plates is provided with a pin 7, the arrangement being such that the pins 7 are in alignment. About each of the pins 7 there is arranged pivotably an arm 8 which extends rearwardly along the inner side of a plate 6. Near the rear side of the box-like frame portion 1, between the said frame portion and the arm 8, there is arranged an adjusting device 9 which, preferably, is constituted by a threaded spindle and with whose aid the arm 8 can be adjusted by pivoting about the pin 7 to be locked in a plurality of positions. Between the free rear ends of the arms 8 there is supported freely rotatably a roller 10 which extends transversely to the direction of operative travel A, the arrangement being such that the working depth of the soil working members 3 can be set with the aid of the roller. At its front side, the frame portion 1 is fitted with a trestle 11 including a three-point connection for coupling the machine to the three-point lifting hitch of a tractor.

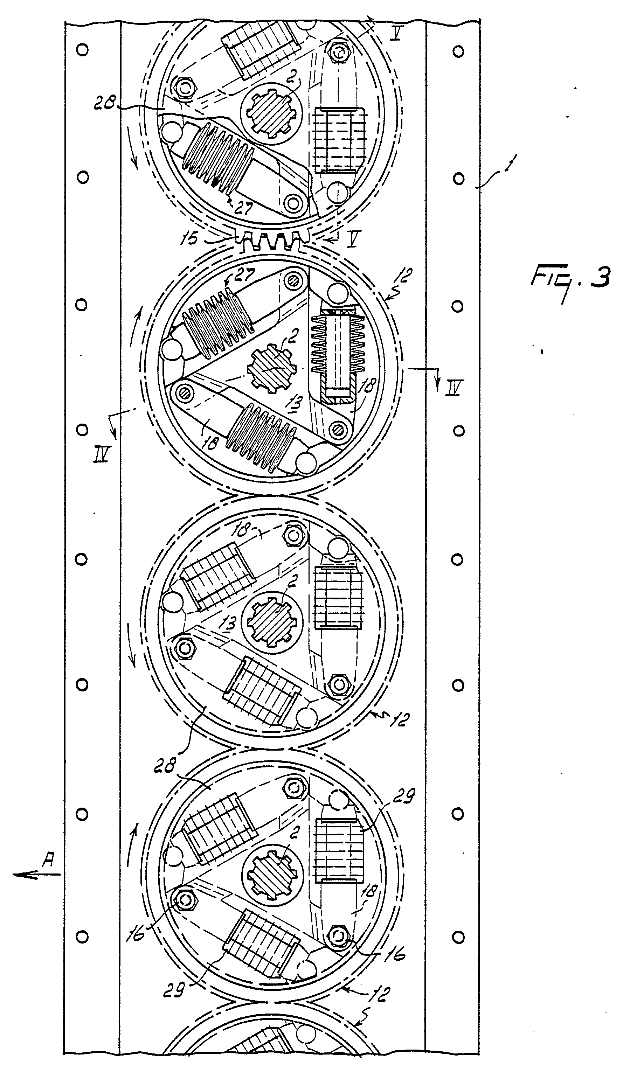

Inside the box-like frame portion 1, each of the shafts 2 is provided with a gear wheel 12. Each gear wheel 12 has a hub 13 which is mounted on the shaft 2 by means of splines. As is apparent from Figures 3 and 6, the hub 13 is substantially in the shape of an equilateral triangle having in each corner a lug 14 which extends into the extension of a side and to near the inner side of a gear ring 15. Each lug 14 is arranged capable of pivoting about a bolt 16 and a spacer bushing 17 provided therearound between the lug-shaped ends of a cylindrical portion 18 which at its other side is provided with a bore 19, which bore extends in the longitudinal direction and axially relative to the longitudinal centre line of the cylindrical portion to at least approximately the midway point thereof (Figure 5). By means of a lubricant channel 20, the bore 19 is connected to the space formed between the lug-shaped ends, inside which a lug 14 of the hub 13 is present. One end of a rod 21 fits into the bore 19. A number of double cup springs 23, seven in this embodiment, are enclosed around the rod 21 between the end of the cylindrical portion 18 and a stop 22 at the opposite end of the rod. The other side of the stop 22 bears under the action of the springs 23 against a round pin 24 by means of corresponding recesses (Figure 6). The pin 24 extends parallel to the bolt 16 and is supported in a projection 25 arranged at the inner side of the gear ring 15. The projection 25 reaches to into a recess near the midway point of the relevant side of the stop 22, which recess is in connection with the bore 19 via an axially extending bore 26 forming a lubricant channel (Figure 5). The longitudinal centre lines of the cylindrical portion 18 and of the rod 21, which longitudinal centre lines are in alignment, extend at least substantially parallel to the adjacent side of the triangular hub 13. The projections 25 are located at the inner side of the gear ring 15 spaced apart by peripheral angles of approximately 120°. Each assembly of cylindrical portion 18, rod 21 and double cup springs 23 constitutes a spring-loaded mechanism 27 which is arranged between a lug 14 of the hub 13 and a projection 25 at the inner side of the gear ring 15 and forms a resilient connection, always a lug 14 being forced against a side of a projection 25 remote from the side where the pin 24 is located (Figure 3). In order to centre the gear ring 15, it is provided at its upper and lower sides with a recess, inside which is located the outer circumference of a plate 28 whose inner circumference bears against a circular edge of the hub 13. The plates 28 are kept in position by means of the bolts 16 and the spacer bushings 17 surrounding same, the arrangement being such that, with respect to the periphery of the plates 28, the gear ring 15 is rotatable relative to the hub 13 about an axis which coincides with the longitudinal centre line thereof against the action of the spring-loaded mechanisms 27, whereby the contact between the lugs 14 of the hub 13 and the projections 25 arranged at the inner side of the gear ring 15 is lost (Figure 6). In the region of the double cup springs 23, each of the plates 28 is provided with a recess 29. As is apparent from Figure 3, three gear wheels 12 having identically arranged spring-loaded mechanisms 27 are provided in a side-by-side relationship near the midway point of the frame portion 1. The central gear wheel is mounted on a shaft 2 which extends upwardly and reaches to into a gear box 30 mounted on the upper side of the cylindrical frame portion 1. Inside the gear box 30, the extension is in driving connection via a bevel gear transmission and a speed variator 31 located at the rear side of the gear box to a shaft 32 which extends in the direction of operative travel A and projects from the gear box at the front side. In the embodiment shown there are present four and five gear wheels 12, respectively, on either side of the three gear wheels, i.e. the machine comprises twelve soil working members 3. Within the groups of four or five gear wheels, the arrangement of the spring-loaded mechanisms 27 is mirror-inverted for adjacent gear wheels, while the spring-loaded mechanisms 27 of the gear wheels located next to the outermost ones of the said three gear wheels are also mirror-inverted relative to those of said outermost gear wheels (Figure 3).

The implement as described in the foregoing operates as follows:

During operation, the machine is coupled by means of the trestle 11 to the three-point lifting hitch of the tractor and the shaft 32 projecting from the front side of the gear box 30 is connected via an intermediate shaft 33 to the power take-off shaft of the tractor. During travel of the machine in a direction indicated by the arrow A, the respective soil working members 3 are driven via the above-described transmission comprising the gear wheels 12, each of which includes the spring-loaded mechanisms 27 and is accommodated in the box-like frame portion 1, in such a direction that two adjacent soil working members 3 rotate in opposite directions, whereby the soil working elements 5 of the soil working members 3 cultivate at least contiguous strips of soil. The spring-loaded mechanisms 27 present in each of the respective gear wheels 12 render it possible that, when solid objects in the soil to be worked exercise reaction forces on a soil working member 5 or on a carrier 4, whereby they can cause damage to or can exercise a braking effect on the shaft 2 of a soil working member 3, the hub 13 can deflect such relative to the gear ring 15 of a gear wheel 12 against the action of the springs 23 around the shaft 2 that the lugs 14 of the hub 13 are removed from the projections 25 arranged at the inner side of the gear ring 15. In this situation, as is shown in Figure 6, the hub 13 can be rotated through a circumferential angle of not more than approximately 9°. The pretensioned double cup springs 23 surrounding the rod 21 have such a spring characteristic that a deflection of the hub 13 with respect to the gear ring 15 only occurs when there is a risk of damage. The gear wheel 12 located near the centre, which gear wheel is driven directly from the power take-off shaft of the tractor, is provided with spring-loaded mechanisms 27 whose double cup springs 23 have such a spring characteristic that it is sufficient to transfer, during normal operation, via the hub 13 the total power required for driving all the soil working members 3 to the gear ring 15. Preferably, the springs are suitable to transfer a power of 76 kW at a number of revolutions of approximately 300 revs/min. Should there be any risk of damage to one or more soil working members caused by the reaction forces of solid objects in the soil during operation, then the gear ring 15 located at the centremost gear wheel 12 can deflect relative to the hub 13, so that these shocks can be absorbed effectively. When the gear ring 15 or the hub 13 of a gear wheel deflects, the rod 21 is displaced, so that the portion thereof located within the bore 19 in the cylindrical portion 18 acts as a piston, thereby forcing the lubricant contained in the frame portion 1 through the channels 20 and 26, which provides a buffering effect. The use of the above-described gear wheels 12, each of which being provided with at least three spring-loaded mechanisms 27, renders it possible to prevent shocks ocurring during operation and produced by solid objects in the soil from so loading the shafts and their bearings and also the teeth of the gear wheels that damage may occur immediately or at a later instant. Due to the use of the above-described gear wheels, the shafts and the bearings therefor may be of a lighter construction than in machines known so far. The gear wheels are of such a construction that they can be employed without further measures in any existing machine of the above type.

## Claims

1. A soil cultivating machine comprising a frame and at least one soil working member (3) that is drivable by means of a transmission including at least one gear wheel (12), characterized in that the gear wheel (12) includes a gear ring (15) mounted rotatably between two plates (28) against a spring force acting around the shaft (2) of the said soil working member (3).

2. A soil cultivating machine as claimed in claim 1, characterized in that the transmission includes at least one gear wheel (12), the gear ring (15) of which is drivably connected to a hub (13) by means of a spring-loaded mechanism (27), and also includes at least one gear wheel (12), the hub (13) of which drives the gear ring (15) by means of a spring-loaded mechanism (27).

3. A soil cultivating machine as claimed in claim 1 or 2, characterized in that a gear wheel (12) is positioned in a lubricant bath, and that a spring-loaded mechanism (27) disposed between the hub (13) and a gear ring (15) is of such a construction that, during movement, the lubricant is reciprocated therethrough.

4. A soil cultivating machine as claimed in claim 2 or 3, characterized in that a gear wheel (12) has a hub (13) which bears in at least one point via a spring-loaded mechanism (27) against a projection (25) at the inner side of a rotatable gear ring (15).

5. A soil cultivating machine as claimed in claim 4, characterized in that the hub (13) is in driving connection in three interspaced points with a rotatable gear ring (15) by means of a spring-loaded mechanism (27).

6. A soil cultivating machine as claimed in claim 5, characterized in that the points wherein the spring-loaded mechanisms (27) act on the hub (13) and the gear ring (15), respectively, are interspaced by circumferential angles of approximately 120°.

7. A soil cultivating machine as claimed in claim 5 or 6, characterized in that the hub (13) is substantially designed as an equilateral triangle, and that the points wherein the spring-loaded mechanisms (27) act on the hub (13) are located near the vertices formed by lugs (14) which, during normal operation, bear against a projection (25) arranged at the inner side of the gear ring (15) under the action of the said spring-loaded mechanisms (27).

8. A soil cultivating machine as claimed in claim 6 or 7, characterized in that a projection (25) arranged at the inner side of the gear ring (15) constitutes both a stop for a lug (14) of the hub (13) and a point of connection for a spring-loaded mechanism (27) connected to a subsequent lug (14) of the hub (13).

9. A soil cultivating machine as claimed in any one of claims 2 to 8, characterized in that a spring-loaded mechanism (27) comprises a cylindrical portion (18) wherein a rod (21) is slidable against the action of a spring (23).

10. A soil cultivating machine as claimed in claim 8 and 9, characterized in that the cylindrical portion (18) is connected pivotably to the hub (13), while the rod (21) bears pivotably against a pin (24) which constitutes part of a projection (25) arranged at the inner side of the gear ring (15), which projection (25) forms a stop for a lug (14) of the hub (13) to which another spring-loaded mechanism (27) is connected.

11. A soil cultivating machine as claimed in claim 9 or 10, characterized in that the cylindrical portion (18) and the rod (21) are each provided with a bore (19, 26), the arrangement being such that, on sliding of the rod (21) in the cylindrical portion (18), lubricant is displaced under pressure.

12. A soil cultivating machine as claimed in any one of claims 9 to 11, characterized in that a plurality of double cup springs (23) are arranged around the rod (21) between the cylindrical portion (18) and a stop (22) on the rod (21).

13. A soil cultivating machine as claimed in any one of the preceding claims, characterized in that on both sides of the hub (13) there is provided a plate (28), and that the periphery of the plates (28) is adapted to co-operate with a recessed portion at the inner side of the gear ring (15) with the object of centring same.

14. A soil cultivating machine as claimed in any one of the preceding claims, characterized in that a plurality of soil working members (3) are arranged in side-by-side relationship in a row, and that the gear wheels (12) comprising at least one spring-loaded mechanism (27) are mounted on the shafts (2) of at least a number of adjacent soil working members (3), which gear wheels (12) are drivingly interconnected via the gear rings (15).

15. A soil cultivating machine as claimed in claim 14, characterized in that at least two gear wheels (12) comprising spring-loaded mechanisms (27) are arranged between a soil working member (3) and a drive shaft (32) to be coupled to a tractor.

16. A soil working machine as claimed in claim 14 or 15, characterized in that a gear wheel (12) having a spring-loaded mechanism (27) is drivable directly from the power take-off shaft of a tractor, and that the spring-loaded mechanisms (27) of the gear wheels (12) are arranged on either side of this gear wheel (12) in an identical manner.

17. A soil cultivating machine as claimed in claim 16, characterized in that the spring-loaded mechanisms (27) of the gear wheels (12) subsequent to the outermost ones of the three gear wheels (12) have their spring-loaded mechanisms (27) arranged alternately mirror-inverted.

FIG. 1

EP 0 305 015 A2

FIG. 2

FIG. 4

FIG. 5

FIG. 3

FIG. 6